# EUROPEAN PATENT APPLICATION

(11) **EP 1 260 619 A1**
(43) Date of publication of application: **27.11.2002**
(21) Application number: 02253488.7
(22) Date of filing: 17.05.2002
(51) Int. Cl.: D01F 9/24, D01F 9/32, C08K 3/04, C01B 31/04

(54) **Carbon fiber powder, a method of making the same, and thermally conductive composition**

(30) Priority: 22.05.2001 JP 2001152538
(71) Applicant: Polymatech Co., Ltd., Tokyo 103-8424 (JP)
(72) Inventor: Tobita, Masayuki, Polymatech Co. Ltd R & D Center, Tokyo 114-0014 (JP); Shimoyama, Naoyuki Polymatech Co. Ltd R & D Center, Tokyo 114-0014 (JP); Tateda, Shinya Polymatech Co. Ltd R & D Center, Tokyo 114-0014 (JP)
(74) Representative: Sherrard-Smith, Hugh

(57) **Abstract**

A carbon fiber powder is produced by graphitizing a polymeric fiber having an aromatic ring on its main chain by heating and then pulverizing or cutting it. The polymeric fiber is selected from the group consisting of polybenzazole fiber, aromatic polyamide fiber, aromatic polyimide fiber, polyphenylene sulfide fiber, and wholly aromatic polyester fiber. The carbon fiber is preferably graphitized by heating the polymeric fiber at least 2500 degree C under vacuum or in an inert gas. Thus, the carbon fiber powder that has excellent thermal conductivity and filling capability, a method of making the carbon fiber powder, and a thermally conductive composition including the carbon fiber powder are provided.

## Description

### BACKGROUND OF THE INVENTION

This invention relates to carbon fiber powder that has excellent thermal conductivity and filling capability, a method of making the same, and a thermally conductive composition containing the powder.

With recent advancements, miniaturization, and lightening of electronic hardware, semiconductor packages have become more compact and more highly integrated and operated at higher speed. Therefore, the heat generated by the electronic hardware is a very important issue. Generally, to dissipate the heat from heat-generating components to outside, a molded article and a liquid composition, such as a sheet material made of a thermally conductive polymer composition, polymer grease and adhesive, are placed between a radiator and one of the followings: a printed circuit board; a semiconductor package; and a heat radiator. The heat radiator is, for example, a radiation plate or a heat sink.

Such thermally conductive compositions include a matrix, such as resin and rubber, and a filler that has high thermal conductivity in the matrix. Possible fillers include metal oxide, metal nitride, metal carbide, and metal hydroxide. Examples of such possible fillers include aluminum oxide, boron nitride, silicon nitride, magnesium oxide, zinc oxide, silicon carbide, quartz, and aluminum hydroxide. However, such compositions do not necessarily have sufficient thermal conductivity.

In order to improve the thermal conductivity, various compositions have been proposed that include highly thermally conductive graphite powders or carbon fibers as filler in the matrix.

For example, Japanese Laid-Open Patent Publication No.62-131033 discloses a molded body made of thermally conductive resin in which the resin is filled with graphite powders. Japanese Laid-Open Patent Publication No.4-246456 discloses a composition of polyester resin containing carbon black or graphite. Japanese Laid-Open Patent Publication No.5-17593 discloses a thermally conductive molded body of great mechanical strength in which the carbon fibers are arranged in a certain direction and are impregnated with graphite powder and thermosetting resin. Japanese Laid-Open Patent Publication No.5-222620 discloses a thermally conductive material using pitch-based carbon fibers that have a specific cross section. Japanese Laid-Open Patent Publication No.5-247268 discloses a rubber composition in which is mixed synthetic graphite having a particle size of 1 to 20µm. Japanese Laid-Open Patent Publication No.9-283955 discloses a thermally conductive sheet in which the graphitized carbon fibers of specific aspect ratio are dispersed in polymer, such as silicone rubber. Japanese Laid-Open Patent Publication No.10-298433 discloses a composition and a radiation sheet in which silicone rubber has, mixed within it, spherical graphite powders having an interplanar spacing of crystals from 0. 330 to 0. 340nm. Japanese Laid-Open Patent Publication No.2-242919 and Japanese Laid-Open Patent Publication No.7-48181 disclose certain pitch-based carbon fibers as highly thermally conductive carbon fibers.

Thus, pitch-based carbon fiber has been known for highly thermally conductive carbon fiber used as thermally conductive filler. More particularly, isotropic pitch-based carbon fiber and mesophase pitch-based carbon fiber have been known for that purpose. Such pitch-based carbon fiber is obtained by spinning raw pitch, infusibilizing the resulting pitch fiber, and graphitizing it by heating. On the other hand, highly thermally conductive fiber cannot be obtained from PAN-type carbon fibers and rayon-type carbon fibers produced by graphitizing polyacrylonitrile fiber and rayon fiber by heating, since the graphitization upon heating is hard to achieve. To this end, a pitch-based carbon fiber is advantageous.

Meanwhile, Japanese Laid-Open Patent Publication No.9-324127 discloses highly thermally conductive powdery graphite, die bond adhesive for a semiconductor element, and a semiconductor device in which the powdery graphite is blended in thermosetting adhesive resin. The powdery graphite is obtained by graphitizing a polymeric film by heating and pulverizing or cutting the resultant graphitized film.

However, for recent high performance electronic parts, due to increase in amount of heat generation, the need for greater thermal conductivity has increased. Therefore, the thermal conductivity is still insufficient for the above-mentioned compositions that include graphite powder or carbon fibers as thermally conductive filler.

Further, as for pitch-based carbon fibers, pitch fiber used as a raw material has poor heat resistance. Therefore, to prevent pitch fiber from melting at high temperature, infusibilizing for several hours below 400 degree C with oxygen-containing gas such as air, placing in oxidative water solution such as nitric acid and chromic acid, or polymerizing with light or gamma ray, are required before the graphitization process by heating. This leads to low productivity of the fiber.

The powdery graphite proposed in Japanese Laid-Open Patent Publication No.9-324127 has an advantage that the infusibilization process is eliminated. However, since a planar polymeric film is used as a raw material of the powdery graphite, cumbersome pulverization or cutting of the film is needed after heat treatment. In addition, the resultant pulverized products or cut products have nonuniform shape or size. In other words, fine powders and coarse powders are present in the products. Thus, it is difficult to contain such powdery graphite filler in a matrix at high concentration.

The objective of the present invention is to provide carbon fiber powder that has excellent thermal conductivity, as well as is filled in a matrix at high concentration; a simple method of making the carbon fiber powder; and a thermally conductive composition including the carbon fiber powder.

According to the present invention, the carbon fiber is produced by graphitizing a polymeric fiber having an aromatic ring on its main chain by heating. The carbon fiber may be in the powder form.

Other aspects and advantages of the invention will become apparent from the following description, taken in conjunction with the accompanying drawings, illustrating by way of example the principles of the invention.

### DETAILED DESCRIPTION OF THE PREFERRED EMBODIMENTS

Embodiments of the present invention are described in detail below.

### 1. Carbon Fiber Powder

The carbon fiber powder is a pulverized or cut product of the carbon fiber that is obtained by graphitizing by heating a polymeric fiber having an aromatic ring on its main chain.

### 1.A. Polymeric Fiber as a Raw Material

Firstly, a polymeric fiber of the present invention used as a raw material is described. The polymeric fiber of the present invention has an aromatic ring on its main chain. As used herein, an aromatic ring generally refers to a ring that belongs to an aromatic group and means a group of organic compounds including aromatic hydrocarbons, such as benzene ring, naphthalene ring, and anthracene ring, and derivatives thereof.

The polymeric fiber of the present invention is not particularly limited to, but includes, polybenzazole fiber, aromatic polyamide fiber, aromatic polyimide fiber, polyphenylene sulfide fiber, wholly aromatic polyester fiber, polyphenylene benzoimidazole fiber, polyparaphenylene fiber, and polyparaphenylene vinylene fiber.

One of the reasons for using the polymeric fiber having an aromatic ring on its main chain as a raw material is that such a polymeric fiber is easily graphitized upon heating and thus produces highly thermally conductive carbon fiber or carbon fiber powder, in which graphite structure is highly developed. On the other hand, when a conventional polymeric fiber having no aromatic ring on its main chain is used as a raw material, for example, polyacrylonitrile fiber, rayon fiber, or phenol fiber, the graphitization upon heating is difficult. Thus, highly thermally conductive carbon fibers or carbon fiber powder can not be obtained.

Another reason for using the polymeric fiber of the present invention as a raw material is that such polymeric fiber has so high heat resistance that it is hard to melt but often keeps its shape upon heating, and thus the above-mentioned infusibilization process is not necessarily needed. Thus, productivity at a manufacturing step is improved.

A further reason for using the polymeric fiber of the present invention as a raw material is that pulverization or cutting is easier when using such fiber rather than using the planar graphite film as a raw material. Besides, fine and uniform carbon fiber powders having a limited bulk can be easily obtained.

Among them, the polymeric fiber of the present invention is more preferably at least one fiber selected from the group consisting of polybenzazole fiber, aromatic polyamide fiber, aromatic polyimide fiber, polyphenylene sulfide fiber, and wholly aromatic polyester fiber. Most preferably, the polymeric fiber is at least one fiber selected from the group consisting of polybenzazole fiber, aromatic polyimide fiber, and aromatic polyamide fiber. The polymeric fiber having an aromatic ring on its main chain tends to be graphitized easier upon heating as it has more aromatic rings. Thus, carbon fiber or carbon fiber powder that has extremely excellent thermal conductivity is obtained by using such preferred polymeric fibers. The diameter, profile of cross section, and length of the polymeric fiber of the present invention is not limited.

As used herein, polybenzazole fiber refers to a polymeric fiber that is formed of polybenzazole polymer. The polybenzazole fiber is generally excellent in strength, modulus of elasticity, heat resistance, flame resistance, and electric insulation. The polybenzazole polymer (PBZ) refers to polybenzooxazole homopolymer (PBO), polybenzothiazole homopolymer (PBT); or random copolymer, sequential copolymer, block copolymer,, or graft copolymer of PBO and PBT. PBZ may be synthesized by a known method. An example of commercially available PBZ is ZYLON™ from Toyobo Co., Ltd.

The aromatic polyamide fiber includes poly(paraphenylene isophthalic amide) and poly(metaphenylene isophthalic amide). Examples of commercially available aromatic polyamide fiber are, for poly(paraphenylene isophthalic amide), KEVLAR™ from Du Pont-Toray Co., Ltd., Technora™ from Teijin Limited, and Twaron™ from Akzo; and for poly(metaphenylene isophthalic amide), NOMEX™ from Du Pont-Toray Co., Ltd.,CONEX™ from Teijin Limited, and Apyeil™ from Unitika Ltd. The aromatic ring of these products may include a substituent such as halogen group, alkyl group, cyano group, acetyl group, and nitro group.

In addition, aromatic polyimide fiber (from Inspec Fibres GmbH), polyphenylene sulfide fiber (PROCON™ from Toyobo Co., Ltd.), wholly aromatic polyester fiber (VECTRAN™ from Unitika Ltd. And ECONOL™ from Sumitomo Chemical Company Limited), polybenzoimidazole fiber(from Hoechst Celanse) are easily available.

### 1.B. A Method of making Carbon Fiber Powders

Next, a method of making carbon fiber powders is described. The carbon fiber powders are produced by graphitizing the above-mentioned polymeric fiber of the present invention by heating, and pulverizing or cutting the resultant carbon fiber.

The heating temperature should be at least 2500 degree C. When the temperature is lower than 2500 degree C, graphitization of the fiber becomes insufficient and carbon fiber that has high thermal conductivity can not be obtained. Preferably, the heating is conducted under vacuum or in an inert gas, such as argon gas or nitrogen gas. When the fiber is not heated under vacuum or in an inert gas, the polymeric fiber may be undesirably degenerated by oxidation. In practice, the fiber is preferably heated for a given time at a high temperature from 2800 to 3200 degree C in argon gas. This actively promotes graphitization of the fiber to produce highly thermally conductive carbon fiber in which graphite structure highly develops. The process is not particularly limited to specific rates of heating temperature or to a specific treating period.

In heating the polymeric fiber, polymeric fibers are preferably bundled. Such bundle of the fibers allows a large amount of the fibers to be placed in a certain volume of the heating reactor. Thus, the heating treatment is conducted efficiently and the productivity is improved. Further, by pressurizing the bundled polymeric fibers, an even larger amount of the fibers can be placed in a certain volume of the heating reactor, thereby improving productivity.

To pulverize or cut fibers, pulverizing machines are available, such as a Victory mill, a jet mill, and a high-speed rotation mill or cutters for chopping fibers. To make the pulverization or cutting effective, it is advantageous if a rotor of each machine that has blades that rotate at high speed to cut the fibers in a direction perpendicular to the fibers. The average length of the pulverized or cut fibers is changed by adjusting the rotation number of the rotor or an angle of the blades. Grinding machines such as a ball mill could be used for pulverizing the fibers. However, such machines are undesirable in that they apply perpendicular pressure to fibers, which generates cracks in the axial direction of the fibers. This pulverization or cutting process may be conducted either before or during the heating of the fiber.

### 1.C. Properties of the Carbon Fiber Powders

The properties of resultant carbon fiber powders are described.

The graphitized carbon fiber powders specifically take the form of fiber (including a pulverized product or a cut product that keeps the fibrous form), a scale, a whisker, a micro coil, or a nanotube. However, other forms are also applicable.

The diameter of the graphitized carbon fiber powders is not particularly limited but is preferably 5-20µm. The fiber powders that have a diameter of 5-20µm are easily produced industrially. The fiber diameters smaller than 5µm or larger than 20µm decrease the productivity of the fiber powders.

The average particle size or length of the graphitized carbon fiber powders is not particularly limited but is preferably 5-500µm. When the average particle size of each fiber powder is smaller than 5µm, the contact of the fiber powders in the matrix is reduced and a heat transfer becomes insufficient. This reduces the thermal conductivity of the resultant thermally conductive composition. When the average particle size is larger than 500µm, the fiber powders are too bulky to be mixed in the matrix at a high concentration. The average particle size can be calculated from the particle size distribution by laser diffractometry model.

From X-ray diffractometry, it is preferred that the graphitized carbon fiber powders have an interplanar spacing (d002) of graphite planes of less than 0.3370 nm. When the interplanar spacing (d002) is less than 0.3370 nm, carbon fiber powders and a thermally conductive composition that have higher thermal conductivity can be achieved. When the interplanar spacing (d002) is 0.3370 nm or greater, the thermal conductivity is inadequate. Accordingly, a composition that has high thermal conductivity can not be obtained by using such carbon fiber powders as thermally conductive filler. The lower limit of the interplanar spacing (d002) is a theoretical value of 0.3354 nm.

In the X-ray diffractometry, a diffractometry pattern of the carbon fibers is measured by using CuK alpha as a X-ray source and highly purified silicon as a standard material. The interplanar spacing (d002) is calculated from the peak position and half-value width of the (002) diffractometry pattern. This calculation is based on a method pursuant to Japan Society for the Promotion of Science.

The thermal conductivity is not particularly limited but preferably at least 400W/(m·K), more preferably at least 800W/(m·K), and most preferably at least 1000W/(m·K).

### 2. Thermally Conductive Composition

A thermally conductive composition includes the above-mentioned carbon fiber powders in a matrix as thermally conductive filler.

### 2.A. Matrix

The matrix is preferably selected according to required characteristics or applications such as a shape, hardness, mechanical properties, thermal properties, electrical properties, durability, and reliability of the resultant sheet. Matrix is preferably a polymeric material if molding capability is taken into consideration.

The polymeric material is preferably selected from thermoplastic resin, thermoplastic elastomer, thermosetting resin, and vulcanized rubber according to required characteristics. For example, preferred thermally conductive adhesives include adhesive polymeric materials such as epoxy resin, polyimide, and acrylic resin. Preferred molding materials include thermoplastic resin, thermoplastic elastomer, thermosetting resin, and vulcanized rubber.

The thermoplastic resin includes polyethylene, polypropylene, ethylene-α-olefin copolymer such as ethylene-propylene copolymer, polymethylpentene, polyvinyl chloride, polyvinylidene chloride, polyvinyl acetate, ethylene vinyl acetate copolymer, polyvinyl alcohol, polyacetal, fluororesins such as polyvinylidene fluoride and polytetrafluoroethylene, polyethylene terephthalate, polybutylene terephthalate, polyethylene naphthalate, polystyrene, polyacrylonitrile, styrene acrylonitrile copolymer, ABS resin, polyphenylene ether (PPE) resin and modified PPE resin, aliphatic and aromatic polyamides, polyimide, polyamide imide, polymethacrylic acid and polymethacrylates such as polymethyl methacrylate, polyacrylic acids, polycarbonate, polyphenylene sulfide, polysulfone, polyether sulfone, polyether nitrile, polyether ketone, polyketone, liquid crystal polymer, silicone resin, and ionomer.

The thermoplastic elastomer includes repeatedly moldable and recyclable thermoplastic elastomers such as styrene-butadiene or styrene-isoprene block copolymers and hydrogenated polymer thereof, styrenic thermoplastic elastomer, olefinic thermoplastic elastomer, vinyl chloride thermoplastic elastomer, polyester thermoplastic elastomer, polyurethane thermoplastic elastomer, and polyamide thermoplastic elastomer.

The thermosetting resin includes epoxy resin, polyimide, bis-maleimide resin, benzocyclobutene, phenol resin, unsaturated polyester, diallyl phthalate, silicone resin, polyurethane, polyimide silicone, thermosetting polyphenylene ether resin and modified PPE resin.

The vulcanized rubber and analogues thereof include natural rubber, butadiene rubber, isoprene rubber, styrene-butadiene copolymer rubber, nitrile rubber, hydrogenated nitrile rubber, chloroprene rubber, ethylene-propylene rubber, chlorinated polyethylene, chlorosulfonated polyethylene, butyl rubber and halide butyl rubber, fluorine rubber, urethane rubber, and silicone rubber.

In terms of temperature characteristics such as thermal resistance and electric reliability, the matrix polymer is preferably at least one material selected from the group consisting of silicone rubber, epoxy resin, polyurethane, unsaturated polyester, polyimide, bis-maleimide, benzocyclobutene, fluororesin, polyphenylene ether resin and thermoplastic elastomer. More preferably, the matrix polymer is at least one material selected from the group consisting of silicone rubber, epoxy resin, unsaturated polyester resin, polyimide, polyurethane and thermoplastic elastomer.

In an application for a wiring board where permittivity and dielectric loss tangent are small and frequency characteristic is required, fluororesin, thermosetting polyphenylene ether resin, modified PPE resin, and polyolefin resin are desired. To obtain a flexible thermally conductive polymer sheet, a polymer matrix such as low-hardness vulcanized rubber and low-hardness thermoplastic elastomer may be used.

One or more of the above polymers can be used as appropriate. Further, a polymer alloy formed of a plurality of these polymeric materials may be used. The methods of cross-linking thermosetting resin or vulcanized rubber are not limited to thermosetting but include known methods such as light setting and moisture setting.

### 2.B. Properties of Thermally Conductive Composition

The intended thermally conductive composition is obtained by mixing the above-mentioned carbon fiber powders with the matrix and degassing it if necessary. In mixing, known mixing machines such as a blender, a mixer, a roller, an extruder may be used.

The content of the carbon fiber powders is preferably 1 to 800 parts by weight, more preferably 5 to 500 parts by weight, and most preferably 20 to 300 parts by weight relative to 100 parts by weight of the matrix. When the content is less than 1 part by weight, the thermal conductivity of the resultant composition is lowered and radiating property is decreased. When the content is more than 800 parts by weight, the viscosity of the composition is increased, which makes it difficult to disperse the carbon fiber powders in the matrix uniformly. Also, gas bubbles are inevitably included in the matrix.

For the purpose of improvement of the surface of the carbon fiber powders, the surface of the powders may be previously oxidized by electrolytic oxidation or treated with a known coupling agent or a known sizing agent.

This improves wettability or filling capability of the carbon fiber powders to the matrix or the peel strength from the matrix at the interface.

The surface of the carbon fiber powders may also be coated with metal or ceramics by various methods such as electroless plating; electroplating; physical vapor evaporation such as vacuum evaporation, sputtering and ion plating; chemical vapor deposition, spraying; coating; immersion; and mechanochemical method in which fine particles are mechanically fixed on the surface of the fibers.

Other than the carbon fiber powders of the present invention, the thermally conductive polymer composition may also include other thermally conductive materials, an incombustible agent, a softening agent, a colorant, and a stabilizer as required. The other thermally conductive materials include the following:
- metal and ceramic such as silver, copper, gold, aluminum oxide, magnesium oxide, boron nitride, aluminum nitride, silicon nitride, silicon carbide, and aluminum hydroxide
- metal-coated resin
- conventional graphitized carbon fiber
- non-graphitized carbon fiber
- natural graphite
- synthetic graphite
- meso-carbon micro-bead

The carbon fibers, graphites, and beads may be in the form of, for example, spherical powder, powder, fiber, needle, a scale, a whisker, a microcoil, single-wall, or multi-wall nanotube.

In an application where electric non-conductance is particularly required for a thermally conductive polymer sheet, an end product, the composition preferably includes at least one electrical insulative thermally conductive filler selected from the group consisting of aluminum oxide, magnesium oxide, boron nitride, aluminum nitride, silicon nitride, silicon carbide and aluminum hydroxide.

The thermally conductive composition may be processed by, for example, compression molding, extrusion molding, injection molding, casting molding, blow molding, blade molding, and calendering molding. When the composition is liquid, it may be processed by painting, printing, dispensing, and potting other than the above methods. For example, a thermally conductive molded article that has excellent thermally conductive property may be produced by processing the composition into a predetermined shape by the above molding methods. A thermally conductive sheet which has excellent thermal conductivity may be obtained by using vulcanized rubber or thermoplastic elastomer which has low hardness as a matrix and molding the composition into a sheet by the above molding methods.

Thus, the thermally conductive composition may be used as a material for liquid articles such as thermally conductive grease and thermally conductive adhesive, for both of which a high heat radiation property is required. Alternatively, the composition may be used as a material for molded articles such as printed circuit boards, semiconductor packages, heat radiation members including radiation plates and heat sink, a housing, and a thermally conductive sheet. The conductive composition may be used to form thermally conductive grease and thermally conductive adhesive placed between the heating element and the heat transfer member or to form heat radiation members, such as a radiator, a cooler, a heat sink, a heat spreader, a die pad, a printed circuit board, a cooling fan, a heat pipe, and a housing. Thus, a heat-dissipating measure is possible.

The advantages of the above embodiments are described below.

For the polymeric fiber of the present invention, the polymeric fiber having an aromatic ring on its main chain is used, preferably, at least one polymeric fiber selected from the group consisting of polybenzazole fiber, aromatic polyamide fiber, aromatic polyimide fiber, polyphenylene sulfide fiber, and wholly aromatic polyester fiber. Therefore, a highly thermally conductive carbon fiber can be produced in which graphite structure highly develops.

By pulverizing or cutting such carbon fiber, fine and uniform carbon fiber powders can be produced that have two characters required for thermally conductive filler: high thermal conductivity and high filling capability.

The use of the graphitized carbon fiber powders that have an interplanar spacing (d002) of graphite planes of less than 0.3370 nm by X-ray diffractometry makes it possible to produce highly thermally conductive carbon fiber(s) or carbon fiber powders.

In the polymeric fiber having an aromatic ring on its main chain, linear polymers run principally in the direction of the fiber axis. Thus, the carbon fiber or carbon fiber powder can be produced in which graphite planes highly develop in the running direction of the linear polymers or in the direction of the fiber axis. Consequently, the carbon fiber or carbon fiber powder has excellent thermal conductivity, particularly in the direction parallel to the graphite planes.

To produce the carbon fiber powder, the polymeric fiber having an aromatic ring on its main chain, preferably, at least one polymeric fiber selected from the group consisting of polybenzazole fiber, aromatic polyamide fiber, aromatic polyimide fiber, polyphenylene sulfide fiber, and wholly aromatic polyester fiber, is heated at least 2500 degree under vacuum or inert gas to graphitize. This produces a highly thermally conductive carbon fiber in which the graphite structure is highly developed. By pulverizing or cutting this carbon fiber, fine and uniform carbon fiber powders that have good filling capability can be produced simply. In addition, conventional infusibilization process is not necessary required. Moreover, by not pulverizing or cutting planar base material (graphite film) but by using a linear base material(carbon fiber), fine and uniform carbon fiber powders can be produced easily. Thus, pulverization or cutting process is simplified, which results in improvement in productivity of the powders at a manufacturing step.

The carbon fiber powders are mixed in the matrix. Therefore, a thermally conductive complex material can be obtained in which the content of the carbon fiber powders is larger and thermal conductivity is greater than conventional ones, or a thermally conductive complex material can be obtained in which the content of the carbon fiber powders is smaller but thermal conductivity is similar. When the interplanar spacing (d002) of graphite planes by X-ray diffractometry is less than 0.3370 nm, the thermal conductivity of the thermally conductive composition is greatly improved. Although the reason is still unclear why the thermal conductivity is improved like this, it is supposed that it is ascribable to the very strong correlation between the microstructure of the carbon fibers and thermal passages when the carbon fibers are dispersed in the matrix.

As a matrix of the thermally conductive composition, at least one polymeric material is used selected from the group consisting of vulcanized rubber, thermoplastic elastomer, thermoplastic resin, and thermosetting resin that has molding capability. Thus, a thermally conductive composition can be obtained that is applicable depending on various applications or required characteristics.

The content of the carbon fiber powders in the composition is 1 to 800 parts by weight relative to 100 parts by weight matrix. This prevents an increase in the viscosity of the composition and prevents inclusion of bubbles. A thermally conductive composition is obtained in which the carbon fiber powders are uniformly dispersed in the matrix and which has improved thermal conductivity.

### EXAMPLES

The above-mentioned embodiments are further described with reference to Samples, Examples and Comparative examples, which are not intended to limit the scope of the present invention in any way.

### (Sample 1, carbon fiber powders)

As a polymeric fiber having an aromatic ring on its main chain, polybenzazole fiber (Toyobo Co., Ltd., a tradename ZYLON™ HM: polybenzooxazole fiber) was used. After being bundled, the polymeric fibers were placed in a heating reactor and heated at 3000 degree C in an argon gas for two hours to be graphitized to produce carbon fibers. The resultant carbon fibers were pulverized with a high-speed rotation mill to form carbon fiber powders (Sample 1). The carbon fiber powders had a fiber diameter of 9µm, an average particle size of 50µm, and an interplanar spacing (d002) between the graphite planes of 0.3360nm by X-ray diffractometry.

### (Sample 2, carbon fiber powders)

As a polymeric fiber having an aromatic ring on its main chain, polybenzazole fiber (Toyobo Co., Ltd., a tradename ZYLON™ HM: polybenzooxazole fiber) was used. After being bundled, the polymeric fibers were cut to an average length of 5mm, placed in a heating reactor, and heated at 3200 degree C in an argon gas for two hours to be graphitized to produce carbon fibers. The resultant carbon fibers were further pulverized with a high-speed rotation mill to form carbon fiber powders (Sample 2). The carbon fiber powders had a fiber diameter of 9µm, an average particle size of 25µm, and an interplanar spacing (d002) between the graphite planes of 0.3358nm by X-ray diffractometry.

### (Sample 3, carbon fiber powders)

As a polymeric fiber having an aromatic ring on its main chain, aromatic polyimide fiber (Inspec Fibres, a tradename P84) was used. After being bundled, the polymeric fibers were placed in a heating reactor and heated at 3000 degree C in an argon gas for two hours to be graphitized to produce carbon fibers. The resultant carbon fibers were pulverized with a high-speed rotation mill to form carbon fiber powders (Sample 3). The carbon fiber powders had a fiber diameter of 9µm, an average particle size of 50µm, and an interplanar spacing (d002) between the graphite planes of 0.3364nm by X-ray diffractometry.

### (Sample 4, carbon powders)

As a polymeric film, an aromatic polyimide film (Du Pont-Toray Co., Ltd., a tradename KAPTON™ a thickness of 25µm) was used. The polymeric film was placed in a heating reactor and heated at 3000 degree C in an argon gas for 2 hours to be graphitized to produce a graphite film. The resultant graphite film was pulverized with a high-speed rotation mill to form carbon powders (Sample 4). Although the carbon powders had an average particle size of 45µm, the shape and size of each particle is unequal and fine powders of the size of less than 5µm and coarse powders of the size of more than 500µm were mixed considerably. The interplanar spacing (d002) between the graphite planes by X-ray diffractometry was 0.3368nm.

The fiber diameter, the average particle size, and the interplanar spacing (d002) between the graphite planes by X-ray diffractometry of the carbon fiber powders and the carbon powders of Samples 1 to 4 are shown in Table 1.

**Table 1**

| | Sample 1 | Sample 2 | Sample 3 | Sample 4 |
|---|---|---|---|---|
| raw material | polybenzazole fiber | polybenzazole fiber | aromatic polyimide fiber | aromatic polyimide film |
| fiber diameter | 9µm | 9µm | 9µm | 9µm |
| average particle | 50µm | 25µm | 50µm | 45µm |
| interplanar spacing (d002) | 0.3360nm | 0.3358nm | 0.3364nm | 0.3368nm |

As described below, Examples 1 to 7 and Comparative examples 1 and 2 are the examples of a soft thermally conductive sheet formed of silicone rubber. Examples 8 to 12 and Comparative example 3 are the example of a thermally conductive sheet in which recyclable thermoplastic elastomer is used. Examples 13 to 17 and Comparative example 4 are example of a thermally conductive molded article that is capable of injection molding. Examples 18 to 22 and Comparative example 5 is a thermally conductive adhesive of epoxy resin.

### (Example 1)

90 parts by weight of the carbon fiber powders of Sample 1 with their surfaces treated with a silane coupling agent as a thermally conductive filler, 220 parts by weight of aluminum oxide powder (SHOWA DENKO K.K.), and 80 parts by weight of aluminum hydroxide powder (SHOWA DENKO K.K.) were added to and dispersed in 100 parts by weight of an addition-type liquid silicone rubber (Dow Corning Toray Silicone Co., Ltd.) as a matrix to prepare a thermally conductive composition. The resultant composition was hot-pressed and molded to form a thermally conductive sheet of a thickness of 2mm. The resultant sheet had an Asker C hardness of 17. The thermal conductivity in the thickness direction of the sheet was 2.9W/(m·K).

### (Example 2)

A thermally conductive composition was prepared as in Example 1, except that the carbon fiber powders of Sample 2 were used as thermally conductive filler. A thermally conductive sheet having a thickness of 2mm was formed. The resultant sheet had an Asker C hardness of 15. The thermal conductivity in the thickness direction of the sheet was 3.0W/(m·K).

### (Example 3)

A thermally conductive composition was prepared as in Example 1, except that the carbon fiber powders of Sample 3 were used as thermally conductive filler. A thermally conductive sheet having a thickness of 2mm was formed. The resultant sheet had an Asker C hardness of 15. The thermal conductivity in the thickness direction of the sheet was 2.7W/(m·K).

### (Comparative example 1)

A thermally conductive composition was prepared as in Example 1, except that the powders of Sample 4 were used as thermally conductive filler. A thermally conductive sheet having a thickness of 2mm was formed. As described previously, the carbon powders of Sample 4 were unequal so that the carbon powders are difficult to mix in the matrix and gas bubbles could not be removed. The resultant sheet had an Asker C hardness of 13. The thermal conductivity in the thickness direction of the sheet was 1.0W/(m·K).

### (Comparative example 2)

A thermally conductive composition was prepared as in Example 1, except that commercially available pitch-based carbon fiber powder (Petoca materials Ltd., milled Melblon) was used as thermally conductive filler. A thermally conductive sheet having a thickness of 2mm was formed. The resultant sheet had an Asker C hardness of 15. The thermal conductivity in the thickness direction of the sheet was 2.3W/(m·K).

The contents of the thermally conductive composition of Examples 1 to 3 and Comparative examples 1 and 2 and the thermal conductivity in the thickness direction of their respective thermally conductive sheets are shown in Table 2.

**Table 2**

| | Ex.1 | Ex.2 | Ex.3 | Comp.1 | Comp.2 |
|---|---|---|---|---|---|
| thermally conductive filler (type) | Sample 1 | Sample 2 | Sample 3 | Sample 4 | Pitch-based |
| thermally conductive filler (pbw) | 90 | 90 | 90 | 90 | 90 |
| silicone rubber(pbw) | 100 | 100 | 100 | 100 | 100 |
| aluminum oxide (pbw) | 220 | 220 | 220 | 220 | 220 |
| aluminum hydroxide (pbw) | 80 | 80 | 80 | 80 | 80 |
| thermal conductivity W/(m·K) | 2.9 | 3.0 | 2.7 | 1.0 | 2.3 |
| *pbw = part by weight | | | | | |

### (Examples 4 to 7)

A thermally conductive composition was prepared as in Example 1, except that the content of the carbon fiber powders was varied to 5, 20, 300, and 500 parts by weight, respectively. A thermally conductive sheet having a thickness of 2mm was formed. The thermal conductivity in the thickness of the resultant sheets was 1.6W/(m·K), 1.9W/(m·K), 3.6W/(m·K), and 4.2W/(m·K), respectively.

The contents of the thermally conductive composition of Example 1, Examples 4 to 7, and Comparative example 1 and 2 and the thermal conductivity in the thickness direction of their respective thermally conductive sheets are shown in Table 3.

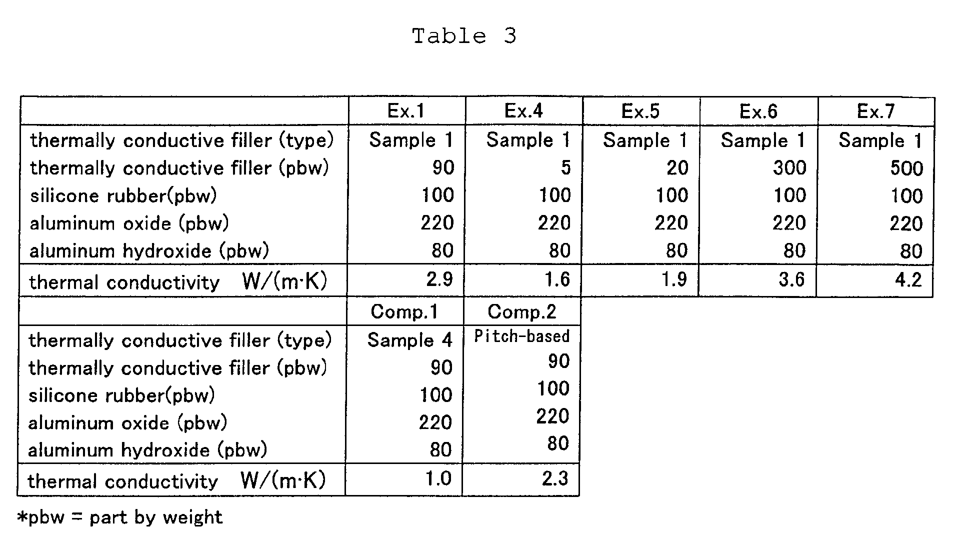

### (Example 8)

100 parts by weight of low-hardness styrenic thermoplastic elastomer (RIKEN VINYL INDUSTRY CO., LTD.) as a matrix, 100 parts by weight of the carbon fiber powders of Sample 1 as a thermally conductive filler, 20 parts by weight of boron nitride powder (DENKI KAGAKU KOGYO KK.), and 20 parts by weight of aluminum hydroxide powder (SHOWA DENKO K.K.) were mixed with a two-axis extruder to prepare a pellet-like thermally conductive composition. The resultant composition was extrusion-molded to form a thermally conductive sheet of a thickness of 3mm. The resultant sheet had a Shore A hardness of 73. The thermal conductivity in the thickness direction of the sheet was 2.1W/(m·K).

### (Examples 9 to 12)

A pellet-like thermally conductive composition was prepared as in Example 8, except that the content of the carbon fiber powders was varied to 5, 20, 300, 500 parts by weight, respectively. A thermally conductive sheet having a thickness of 3mm was formed. The thermal conductivity in the thickness of the resultant sheets was 1.3W/(m·K), 1.6W/(m·K), 2.9W/(m·K), and 3.6W/(m·K), respectively.

### (Comparative example 3)

A pellet-like thermally conductive composition was prepared as in Example 8, except that commercially available pitch-based carbon fiber powder (Petoca materials Ltd., milled Melblon) was used as thermally conductive filler. A thermally conductive sheet having a thickness of 3mm was formed. The resultant sheet had a Shore A hardness of 68. The thermal conductivity in the thickness of the sheet was 1.4W/(m·K).

The contents of the thermally conductive composition of Examples 8 to 12 and Comparative example 3 and the thermal conductivity in the thickness direction of their respective thermally conductive sheets are shown in Table 4.

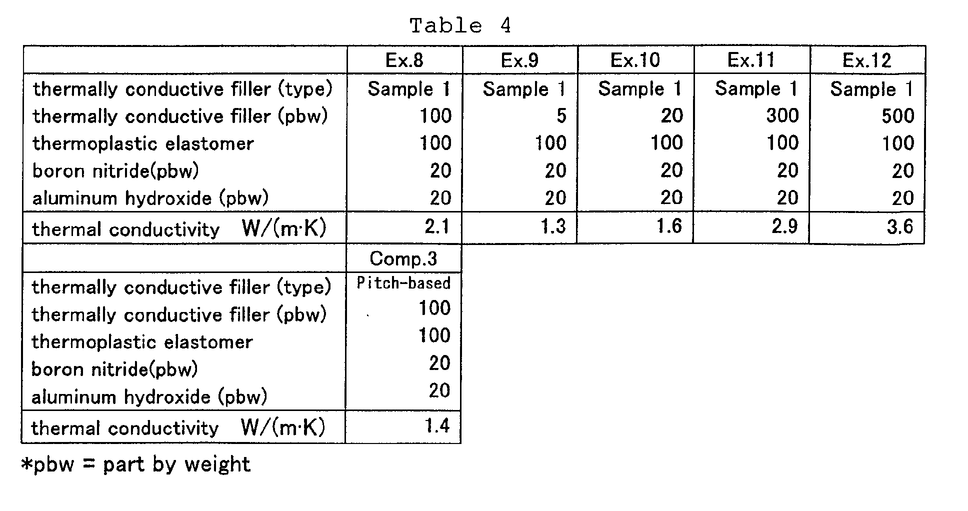

### (Example 13)

100 parts by weight of polyacetal resin (Asahi Kasei Corporation) as a matrix, 80 parts by weight of the carbon fiber powders of Sample 2 with their surfaces treated with a silane coupling agent as a thermally conductive filler, and 50 parts by weight of aluminum oxide powder (SHOWA DENKO K.K.) were mixed with a two-axis extruder to prepare a pellet-like thermally conductive composition. The resultant composition was injection-molded to form a thermally conductive molded article of a thickness of 3mm. The thermal conductivity in the thickness direction of the resultant molded article was 1.7W/(m·K).

### (Examples 14 to 17)

A pellet-like thermally conductive composition was prepared as in Example 13, except that the content of the carbon fiber powders was varied to 5, 20, 300, 500 parts by weight, respectively. A thermally conductive molded article was formed having a thickness of 3mm. The thermal conductivity in the thickness of the resultant molded articles was 1.1W/(m·K), 1.3W/(m·K), 2.8W/(m·K), and 3.5W/(m·K), respectively.

### (Comparative example 4)

A pellet-like thermally conductive composition was prepared as in Example 13, except that the carbon powders of Sample 4 were used as thermally conductive filler. A thermally conductive molded article was formed having a thickness of 3mm. As described previously, the carbon powders of Sample 4 were unequal so that the carbon powders are difficult to mix in the matrix and gas bubbles could not be removed. The thermal conductivity in the thickness of the resultant molded article was 0.8W/(m·K).

The contents of the thermally conductive composition of Examples 13 to 17 and Comparative example 4 and the thermal conductivity of the thermally conductive molded articles are shown in Table 5.

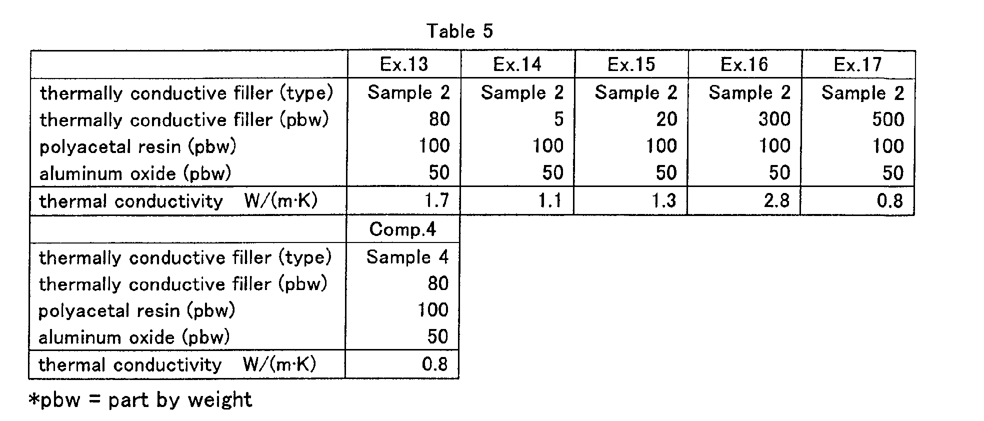

### (Example 18)

150 parts by weight of the carbon fiber powders of Sample 1 with their surfaces treated with a silane coupling agent as a thermally conductive filler and 30 parts by weight of aluminum oxide powder (SHOWA DENKO K.K.) were added to and dispersed in 100 parts by weight of bis-phenol F-type epoxy resin (YUKA SHELL EPOXY CO.,LTD) containing amine-type hardener as an adhesion polymer matrix to prepare a thermally conductive composition which is a thermally conductive adhesive. The resultant composition was thermally hardened to form a plate specimen of thickness of 1mm. The thermal conductivity of the resultant plate specimen was 2.9W/(m·K).

### (Examples 19 to 22)

A thermally conductive composition, which is a thermally conductive adhesive, was prepared as in Example 18, except that the content of the carbon fiber powders was varied to 5, 20, 300, 500 parts by weight, respectively. A plate specimen of thickness of 1mm was formed. The thermal conductivity in the thickness of the resultant plate specimen 1.2W/(m·K), 1.8W/(m·K), 3.4W/(m·K), and 4.1W/(m·K), respectively.

### (Comparative example 5)

A thermally conductive composition, which is a thermally conductive adhesive, was prepared as in Example 18, except that commercially available pitch-based carbon fiber powder (Petoca materials Ltd., milled Melblon) was used as thermally conductive filler. A plate specimen of thickness of 1mm was formed. The thermal conductivity of the resultant plate specimen was 2.3W/(m·K).

The contents of Examples 18 to 22 and Comparative example 5 and the thermal conductivity of the thermally conductive adhesives are shown in Table 6.

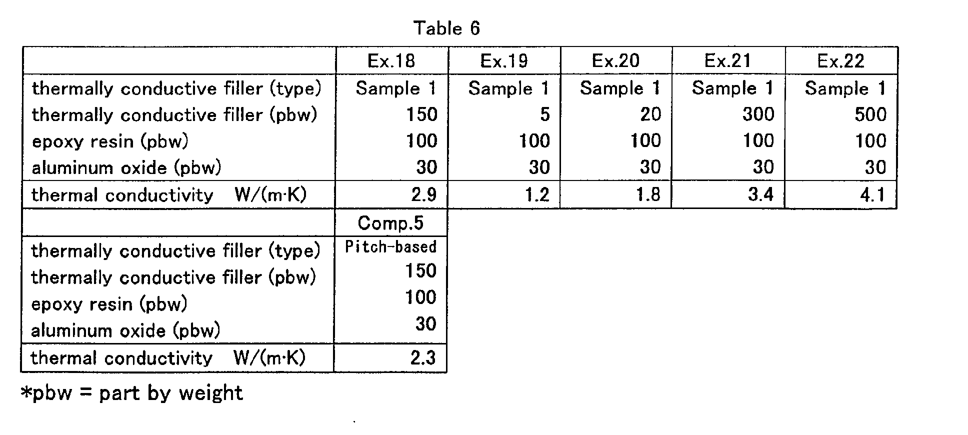

### (Discussion)

As described above, all the thermally conductive compositions of Examples 1 to 22 include, in the matrix, the carbon fiber powders of the present invention (Sample 1 to 3) that are obtained by graphitizing the polymeric fiber having an aromatic ring on its main chain by heating.

On the other hand, the thermally conductive compositions of Comparative example 1 and Comparative example 4 include, in the matrix, the conventional carbon powders (Sample 4) that are obtained by graphitizing the aromatic polyimide film by heating and pulverizing it.

The thermally conductive compositions of Comparative example 2, Comparative example 3 and Comparative example 5 also include, in the matrix, the conventional pitch-based graphitized carbon fiber powders that are produced by treating raw pitch by several processes such as spinning, infusibilization, graphitization, and pulverization.

The compositions of Examples 1 to 3 had higher thermal conductivity compared with those of Comparative example 1 and Comparative example 2. The compositions of Example 8 had a higher thermal conductivity than that of Comparative example 3. The compositions of Example 13 had a higher thermal conductivity than that of Comparative example 4. The composition of Example 18 had a higher thermal conductivity than that of Comparative example 5. Accordingly, is was confirmed that the carbon fiber powders of the present invention of Samples 1 to 3 had a higher thermal conductivity than that of the conventional carbon powders of Sample 4 or the conventional pitch-based carbon fiber powders.

As described previously, the carbon powders of Sample 4 were unequal so that the carbon powders are difficult to mix in the matrix and gas bubbles could not be removed (See Comparative example 1 and Comparative example 4). As appreciated from this fact, it was confirmed that the carbon powders of Sample 4 had poor filling capability. In addition, the resultant thermally conductive compositions had poor thermal conductivity (See Comparative example 1 and Comparative example). On the other hand, such tendency could not be observed when the content of the carbon fiber powders of Samples 1 to 3 was varied in a range from 5 to 500 parts by weight. Instead, it was confirmed that the resultant thermally conductive compositions had high thermal conductivity (See Examples 1 to 22). Thus, it was confirmed that the carbon fiber powders of the present invention of Samples 1 to 3 were also superior in filling capability to the conventional carbon powders of Comparative example 4.

In the method of making the carbon fiber powders (Samples 1 to 3), the fiber is heated, graphitized, and pulverized or cut. This eliminates the need of an infusibilization process. In addition, by using carbon fibers rather than a film, the pulverization or cutting process is simplified. Therefore, in this method, high-performance carbon fiber powders that have two characters of high thermal conductivity and high filling capability can be manufactured easily.

It should be apparent to those skilled in the art that the present invention may be embodied in many other specific forms without departing from the spirit or scope of the invention.

Therefore, the present examples and embodiments are to be considered as illustrative and not restrictive and the invention is not to be limited to the details given herein, but may be modified within the scope and equivalence of the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A carbon fiber **characterized in that** the carbon fiber is produced by graphitizing a polymeric fiber having an aromatic ring on its main chain by heating.

2. The carbon fiber according to Claim 1, **characterized in that** the carbon fiber is in the powder form.

3. The carbon fiber according to Claim 1 or 2, **characterized in that** the polymeric fiber is selected from the group consisting of polybenzazole fiber, aromatic polyamide fiber, aromatic polyimide fiber, polyphenylene sulfide fiber, and wholly aromatic polyester fiber.

4. The carbon fiber according to any one of claims 1 to 3, **characterized in that** the carbon fiber has an interplanar spacing (d002) of graphite planes of less than 0.3370 nm by X-ray diffractometry.

5. The carbon fiber according to Claim 2, **characterized in that** the fiber powder has a diameter of from 5 to 20µm and an average particle size of from 5 to 500µm.

6. A thermally conductive composition **characterized in that** the composition comprises:
a matrix; and
carbon fibers according to any one of Claims 1 to 5 mixed in the matrix.

7. The composition according to Claim 6, **characterized in that** the matrix is at least one polymeric material selected from the group consisting of vulcanized rubber, thermoplastic elastomer, thermoplastic resin, and thermosetting resin.

8. The composition according to Claim 6, **characterized in that** the content of the carbon fibers is from 1 to 800 parts by weight relative to 100 parts by weight of the matrix.

9. The thermally conductive composition according to any one of Claims 6 to 8, **characterized in that** the composition is a thermally conductive molded article molded into a predetermined shape.

10. The thermally conductive composition according to any one of Claims 6 to 8, **characterized in that** the composition is a thermally conductive sheet.

11. The thermally conductive composition according to any one of Claims 6 to 8, **characterized in that** the composition is a thermally conductive adhesive.

12. The thermally conductive composition according to any one of Claims 6 to 8, **characterized in that** the composition is thermally conductive grease.

13. A method of making a carbon fiber **characterized by**:
graphitizing a polymeric fiber having an aromatic ring on its main chain by heating the polymeric fiber at least 2500 degree C under vacuum or in an inert gas.

14. The method according to Claim 13, **characterized in that** the carbon fiber is in the powder form.

15. The method according to Claim 13, **characterized in that** the method further comprises pulverizing or cutting the polymeric fiber after the graphitizing step.

16. The method according to any one of Claims 13 to 15, **characterized in that** the polymeric fiber is selected from the group consisting of polybenzazole fiber, aromatic polyamide fiber, aromatic polyimide fiber, polyphenylene sulfide fiber, and wholly aromatic polyester fiber.
